# EUROPÄISCHE PATENTSCHRIFT

(11) **EP 0 729 442 B1**
(45) Veröffentlichungstag und Bekanntmachung des Hinweises auf die Patenterteilung: **15.04.1998**
(21) Anmeldenummer: 94930959.5
(22) Anmeldetag: 18.10.1994
(51) Int. Cl.: C03C 17/00, C03C 14/00, C04B 41/86, C23C 18/12

(54) **VERFAHREN ZUR HERSTELLUNG VON FUNKTIONELLEN GLASARTIGEN SCHICHTEN**
PROCESS FOR PRODUCING FUNCTIONAL VITREOUS LAYERS
PROCEDE DE PRODUCTION DE COUCHES VITREUSES FONCTIONNELLES

(30) Priorität: 10.11.1993 DE 4338360
(43) Veröffentlichungstag der Anmeldung: 04.09.1996
(73) Patentinhaber: INSTITUT FÜR NEUE MATERIALIEN gemeinnützige GmbH, 66123 Saarbrücken (DE)
(72) Erfinder: SCHMIDT, Helmut, D-66130 Saarbrücken (DE); MENNIG, Martin, D-66287 Quierschied (DE); BURKHART, Thomas, D-66994 Dahn (DE); FINK-STRAUBE, Claudia, D-66125 Saarbrücken (DE); JONSCHKER, Gerhard, D-66583 Spiesen-Elversberg (DE); SCHMITT, Mike, D-53773 Hennef (DE); BAUER, Anette, D-66119 Saarbrücken (DE)
(74) Vertreter: Barz, Peter, Dr.
(86) Internationale Anmeldenummer: EP9403423
(87) Internationale Veröffentlichungsnummer: WO9513249

(56) Entgegenhaltungen:
- EP-A- 0 452 922
- US-A- 5 093 286
- US-A- 5 182 143
- JOURNAL OF SOL-GEL SCIENCE & TECHNOLOGY, Band 1, Nr. 3, 1994, Dordrecht (NL); H. SCHMIDT, Seiten 217-231

## Beschreibung

Die Erfindung betrifft ein Verfahren zur Herstellung von funktionellen glasartigen, vorzugsweise farbigen oder kolloidgefärbten Schichten auf Substraten.

Insbesondere betrifft die Erfindung ein Verfahren zur Herstellung von funktionellen glasartigen Schichten auf Substraten, das dadurch gekennzeichnet ist, daß man eine Zusammensetzung, die erhältlich ist durch Hydrolyse und Polykondensation von
(A) mindestens einem hydrolysierbaren Silan der allgemeinen Formel (I)

   SiX₄ (I)

   in der die Reste X gleich oder verschieden sind und hydrolysierbare Gruppen oder Hydroxylgruppen bedeuten, oder einem davon abgeleiteten Oligomer, und
(B) mindestens einem Organosilan der allgemeinen Formel (II)

   R¹ ₐR² _{b}SiX_{(4-a-b)} (II)

   in der R¹ ein nicht hydrolysierbarer Rest ist, R² einen eine funktionelle Gruppe tragenden Rest bedeutet, X die vorstehende Bedeutung hat und a und b den Wert 0, 1, 2 oder 3 haben, wobei die Summe (a+b) den Wert 1, 2 oder 3 hat, oder einem davon abgeleiteten Oligomer in einem Stoffmengenverhältnis (A):(B) von 5-50 : 50-95, sowie
(C) gegebenenfalls einer oder mehreren Verbindungen von glasbildenden Elementen,
mit mindestens einem Funktionsträger aus der Gruppe der temperaturbeständigen Farbstoffe und Pigmente, Metall- oder Nichtmetalloxide, färbenden Metallionen, Metall- oder Metallverbindungs-Kolloide und Metallionen, die unter Reduktionsbedingungen zu Metall-Kolloiden reagieren, vermischt,
die mit dem Funktionsträger vermischte Zusammensetzung auf ein Substrat aufbringt und
den Überzug thermisch zu einer glasartigen Schicht verdichtet.

Die US-Patentschrift US-A-5 182 143 befaßt sich mit der Hydrolyse von Tetraalkoxysilan (TEOS) im Gemisch mit einem funktionellen Silan (3-Aminopropyltriethoxysilan). Im Beispiel 8 aus Tabelle 1 wird ein Anteil an funktionellem Organosilan von 50 Gew.-% (50 : 50) erreicht. Die nach dieser Lehre zunächst erhältlichen dünnen Sol-Gel-Überzüge, beispielsweise auf Metall- oder Kunststoffsubstraten, können auch thermisch bei Temperaturen von 50 - 1600 C zu einem glasartigen Überzug verdichtet werden. Der Zusatz eines Funktionsträgers aus der Gruppe der temperaturbeständigen Farbstoffe, Pigmente, Metall-oder Nichtmetalloxide, färbender Metallionen oder -kolloide und dgl., um eine Einfärbung der Glasschicht zu erreichen, ist nicht vorgesehen. Zudem werden hydrolysierbare Silane mit stark unterschiedlicher Reaktivität verwendet, um so einen mehrschichtigen Überzug zu erhalten. Dabei hydrolysiert das reaktivere Silan zuerst unter Ausbildung eines ersten Überzugs, sodann kondensiert das weniger reaktive als zweite Schicht.

Das erfindungsgemäße Beschichtungssystem beruht auf der überraschenden Erkenntnis, daß die auf das Substrat aufgebrachte Zusammensetzung trotz ihres relativ hohen Anteils an organischen (kohlenstoff-haltigen) Komponenten einer thermischen Verdichtung bei hohen Temperaturen unterzogen werden kann, ohne daß eine Rißbildung oder ein Transparenzverlust auftritt. Dabei findet ein stetiger Übergang von einem organisch-modifizierten Glas bis hin zu einem rein anorganischen (kohlenstoff-freien) SiO₂-Glas statt. Die eingebrachten Funktionsträger, z.B. Metallkolloide, behalten ihre Funktion (Lichtabsorption, Lichtstreuung, Photochromie, Katalyse, etc.) bei und ergeben z.B. im Falle von Metallkolloiden intensiv gefärbte glasartige Schichten. Die Möglichkeit der thermischen Verdichtung bei relativ hohen Temperaturen erlaubt die Herstellung von rißfreien Beschichtungen mit hoher thermischer, mechanischer und chemischer Stabilität auf Metall-, Glas- und Keramikoberflächen.

Bei den hydrolysierbaren Silanen (A) und den Organosilanen (B) sind die hydrolysierbaren Gruppen X beispielsweise Wasserstoff oder Halogen (F, Cl, Br oder I), Alkoxy (vorzugsweise C₁₋₆-Alkoxy, wie z.B. Methoxy, Ethoxy, n-Propoxy, i-Propoxy und Butoxy), Aryloxy (vorzugsweise C₆₋₁₀-Aryloxy, wie z.B. Phenoxy), Acyloxy (vorzugsweise

C₁₋₆-Acyloxy, wie z.B. Acetoxy oder Propionyloxy), Alkylcarbonyl (vorzugsweise C₂₋₇-Alkylcarbonyl, wie z.B. Acetyl), Amino, Monoalkylamino oder Dialkylamino mit vorzugsweise 1 bis 12, insbesondere 1 bis 6 Kohlenstoffatomen.

Der nicht hydrolysierbare Rest R¹ ist beispielsweise Alkyl (vorzugsweise C₁₋₆-Alkyl, wie Methyl, Ethyl, n-Propyl, Isopropyl, n-Butyl, s-Butyl und t-Butyl, Pentyl, Hexyl oder Cyclohexyl), Alkenyl (vorzugsweise C₂₋₆-Alkenyl, wie z.B. Vinyl, 1-Propenyl, 2-Propenyl und Butenyl), Alkinyl (vorzugsweise C₂₋₆-Alkinyl, wie z.B. Acetylenyl und Propargyl) und Aryl (vorzugsweise C₆₋₁₀-Aryl, wie z.B. Phenyl und Naphthyl). Die genannten Reste R¹ und X können gegebenenfalls einen oder mehrere übliche Substituenten, wie z.B. Halogen oder Alkoxy, aufweisen.

Spezielle Beispiele für die funktionellen Gruppen des Restes R² sind die Epoxy-, Hydroxy-, Ether-, Amino-, Monoalkylamino-, Dialkylamino-, Amid-, Carboxy-, Mercapto, Thioether-, Vinyl-, Acryloxy-, Methacryloxy-, Cyano-, Halogen-, Aldehyd-, Alkylcarbonyl-, Sulfonsäure- und Phosphorsäuregruppe. Diese funktionellen Gruppen sind über Alkylen-, Alkenylen- oder Arylen-Brückengruppen, die durch Sauerstoff- oder Schwefelatome oder -NH-Gruppen unterbrochen sein können, an das Siliciumatom gebunden. Die genannten Brückengruppen leiten sich z.B. von den oben genannten Alkyl-, Alkenyl- oder Arylresten ab. Die Reste R² enthalten vorzugsweise 1 bis 18, insbesondere 1 bis 8 Kohlenstoffatome.

In der allgemeinen Formel (II) hat a vorzugsweise den Wert 0, 1 oder 2, b vorzugsweise den Wert 1 oder 2 und die Summe (a+b) vorzugsweise den Wert 1 oder 2.

Besonders bevorzugte hydrolysierbare Silane (A) sind Tetraalkoxysilane wie Tetraethoxysilan (TEOS) . Besonders bevorzgte Organosilane sind Epoxysilane wie 3-Glycidyloxypropyl-trimethoxysilan (GPTS) und Aminosilane wie 3-Aminopropyl-triethoxysilan und 3-(Aminoethylamino)-propyl-triethoxysilan (DIAMO).

Das Stoffmengenverhältnis des hydrolysierbaren Silans (A) zu dem Organosilan (B) beträgt 5 bis 50 : 50 bis 95, vorzugsweise 15 bis 25 : 75 bis 85.

Die Eventualkomponente (C) ist vorzugsweise im Reaktionsmedium löslich oder dispergierbar. Verwendbar sind z.B. Verbindungen (Halogenide, Alkoxide, Carboxylate, Chelate, etc.) von Lithium, Natrium, Kalium, Rubidium, Cäsium, Beryllium, Magnesium, Calcium, Strontium, Barium, Bor, Aluminium, Titan, Zirkon, Zinn, Zink oder Vanadium. Die Hydrolyse und Polykondensation wird entweder in Abwesenheit eines Lösungsmittels oder vorzugsweise in einem wäßrigen oder wäßrig/organischen Reaktionsmedium, gegebenenfalls in Gegenwart eines sauren oder basischen Kondensationskatalysators wie HCl, HNO₃ oder NH₃ durchgeführt. Bei Einsatz eines flüssigen Reaktionsmediums sind die Ausgangskomponenten in dem Reaktionsmedium löslich. Als organische Lösungsmittel eignen sich insbesondere mit Wasser mischbare Lösungsmittel, z.B. ein- oder mehrwertige aliphatische Alkohole, Ether, Ester, Ketone, Amide, Sulfoxide und Sulfone.

Vorzugsweise erfolgt die Hydrolyse und Polykondensation unter den Bedingungen des Sol-Gel-Prozesses, wobei das Reaktionsgemisch im viskosen Sol-Zustand zum Beschichten des Substrats verwendet wird.

Gegebenenfalls wird die Hydrolyse und Polykondensation in Gegenwart eines Komplexbildners durchgeführt, z.B. Nitraten, β-Dicarbonylverbindungen (z.B. Acetylacetonaten oder Acetessigsäurester), Carbonsäuren (z.B. Methacrylsäure) oder Carboxylaten (z.B. Acetat, Citrat oder Glykolat), Betainen, Diolen. Diaminen (z.B. DIAMO) oder Kronenether.

Das erhaltene Sol wird mit mindestens einem molekulardispersen oder nanoskaligen Funktionsträger aus der Gruppe der temperaturbeständigen Farbstoffe und Pigmente, Metalloxide oder Nichtmetalloxide, färbenden Metallionen, Metall- oder Metallverbindungs-Kolloide und Metallionen, die unter Reduktionsbedingungen zu Metall-Kolloiden reagieren, vermischt.

Als temperaturbeständige Farbstoffe eignen sich z.B. Azofarbstoffe wie Methylorange, Alizaringelb oder Kongorot; Dispersionsfarbstoffe wie Disperse Red; Triphenylmethanfarbstoffe wie Malachitgrün, Eosin, Fluoreszein, Aurin und Phenolthalein; Küpenfarbstoffe wie Indigo, Thioindigo und Anthrachinon-Farbstoffe; Perylenfarbstoffe sowie Fluoreszenzfarbstoffe wie Fluorescent Brightener 28. Verwendbare Pigmente sind z.B. Phthalocyanine mit z.B. Cu, Co, Ni, Zn oder Cr als Zentralatom; Rußpigmente mit einem Partikeldurchmesser unter 500 nm.

Geeignete Metall- oder Nichtmetalloxide sind z.B. SiO₂, TiO₂, ZrO₂, Al₂O₃, Fe₂O₃, Cr₂O₃, CuO, Cu₂O, ZnO, Mn₂O₃, SnO₂, PdO und In₂O₃. Diese Metall- oder Nichtmetalloxide haben vorzugsweise einen Partikeldurchmesser von 1 bis 100 nm.

Die färbenden Metallionen werden vorzugsweise in Form von wasserlöslichen Salzen, z.B. Nitraten oder Halogeniden, von z.B. Mn²⁺, Co²⁺, Fe³⁺ oder Cr³⁺ eingesetzt.

Als Metallkolloide eignen sich insbesondere solche von Ag, Cu, Au, Pd und Pt. Diese haben gewöhnlich einen Partikeldurchmesser von 1 bis 100 nm, das heißt 1 bis 20 nm im Falle von transparenten Schichten bzw. 20 bis 100 nm im Falle von lichtstreuenden Schichten.

Geeignete Metallverbindungen in kolloidaler Form sind z.B. Metallhalogenide wie AgCl, AgBr, AgClₓBr₁₋ₓ und CuCl, Metallcarbide wie TiC und B₄C, Metallnitride wie BN und TiN, Metallarsenide wie Cd₃As₂, Metallphosphide wie Cd₃P₂, Chalkogenide (Sulfide, Selenide, Telluride) wie AgS, CdS, HgS, PbS und ZnS; CdSe, ZnSe, CdTe; und Mischphasen wie ZnSe/PbS₂ und CdS/PbS₂.

Die Metallverbindungen haben einen Partikeldurchmesser von vorzugsweise 1 bis 100 nm, insbesondere 1 bis 50 nm und besonders bevorzugt 2 bis 30 nm.

Die Menge des Funktionsträgers richtet sich nach den gewünschten funktionellen Eigenschaften der Beschichtung, z.B. der gewünschten Farbintensität oder Opazität.

Das Metall- oder Metallverbindungskolloid kann gegebenenfalls in vorkomplexierter Form eingesetzt werden, wobei z.B. die oben genannten Komplexbildner Anwendung finden.

Das mit dem Funktionsträger vermischte Sol wird, nachdem gegebenenfalls noch die Viskosität durch Entfernen oder Zugabe eines Lösungsmittels eingestellt worden ist, nach üblichen Beschichtungsmethoden auf das Substrat aufgebracht. Anwendbare Techniken sind z,.B. das Tauchen, Gießen, Schleudern, Aufsprühen oder Aufstreichen. Das erfindungsgemäß hergestellte Sol hat gegenüber herkömmlichen TEOS-Solen den Vorteil einer sehr langen Topfzeit. Ferner wirken sich Inhomogenitäten in der Beschichtung (ungleichmäßige Dicke) weniger kritisch auf die optische Qualität der Schicht aus, da bei der thermischen Verdichtung keine Rißbildung auftritt. Geeignete Substrate sind z.B. solche aus Metallen wie Edelstahl, Kupfer, Messing und Aluminium; Gläsern wie Floatglas, Borosilikatglas, Bleikristall oder Kieselglas; und Keramiken wie Al₂O₃, ZrO₂, SiO₂-Mischoxiden oder auch Email.

Der erhaltene Überzug wird gegebenenfalls getrocknet und dann thermisch zu einer glasartigen Schicht verdichtet. Dies kann bei Temperaturen über 250°C, vorzugsweiee über 400°C und besonders bevorzugt über 500°C bis unter den Erweichungs- oder Zersetzungspunkt des Substrats erfolgen. Die thermische Verdichtung kann an der Luft oder in einem Inertgas wie Stickstoff oder Argon durchgeführt werden. Die Wärmebehandlung kann gegebenenfalls auch durch IR- oder Laser-Strahlung erfolgen. Es ist auch möglich, durch selektive Wärmeeinwirkung strukturierte Überzüge herzustellen.

Die folgenden Beispiele erläutern die Erfindung.

### HERSTELLUNGSBEISPIEL

### Herstellung eines GPTS/TEOS-Grundsols

Zur Solsynthese werden 160 g 3-Glycidyloxypropyltrimethoxysilan (GPTS) und 40 g Tetraethoxysilan (TEOS) mit 120 ml Ethanol vermischt und unter Rühren auf 60°C erhitzt (Molverhältnis 80:20). Dieser Mischung werden 28,5 g Wasser und 0,5 ml HNO₃ konz. zugegeben und 15 h bei 60°C gerührt. Das so erhaltene Sol wird mit 150 ml Ethanol verdünnt und kann mehrere Wochen als Beschichtungslösung eingesetzt werden.

### BEISPIEL 1

### Herstellung einer lichtstreuende, opalglasähnlichen Schicht

Zu dem Grundsol werden 2 g TiO2-Pulver P25 (Degussa AG) gegeben und 5 Minuten mit einem Ultraschall-Desintegrator homogenisiert. Mit diesem Sol werden Floatglas-Substrate durch Tauchen beschichtet (Ziehgeschwindigkeiten von 2-15 mm/s) und anschließend bei 100-500°C thermisch verdichtet. Man erhält eine ca. 2 µm dicke, matte, lichtstreuende Schicht, die den gleichen optischen Eindruck wie Opalglas zeigt und bis zu einer Verdichtungstemperatur von 500°C rißfrei bleibt.

### BEISPIEL 2

### Herstellung einer Perlmuttglanzschicht

Zu dem Grundsol werden 2,5 g Iriodin^{R} Glanzpigment (Merck, Darmstadt) und 0,1 g Aerosil^{R} 300 (Degussa AG) untergerührt. Die Mischung wird 5 Minuten mit einem Ultraschall-Desintegrator homogenisiert und anschließend im Eisbad auf Raumtemperatur abgekühlt. Mit der Beschichtungslösung werden Mikroskop-Objektträger durch Tauchen mit Ziehgeschwindigkeiten von 2-20 mm/s beschichtet und bei Temperaturen zwischen 100 und 500°C thermisch verdichtet. Nach 100°C erhält man eine flexible, weiche Beschichtung, während nach 500°C die Beschichtung glasähnliche Härte aufweist. Die Schichten zeigen alle einen optisch reizvollen Perlmuttglanz.

### BEISPIEL 3

### Herstellung eines glänzenden Überzugs auf Kupfer

Das Grundsol wird auf alkalisch gereinigte Kupferplättchen durch Tauchbeschichten mit Ziehgeschwindigkeiten von 2 bis 4 mm/s aufgebracht und unter Argon bei 200°C thermisch verdichtet. Die Substrate zeigen eine goldglänzende ca. 1-2 µm dicke Beschichtung.

### BEISPIEL 4

### Herstellung einer matten Beschichtung auf Edelstahl

Dem Grundsol werden nach der Reaktion 300 mg Aluox C^{R} (Degussa) zugefügt und das Pulver mit dem Desintegrator (Branson) 6 min in das Sol dispergiert. Man erhält ein partikelhaltiges Sol, das nach dem Abkühlen auf Raumtemperatur zum Beschichten verwendet werden kann.

Die Ziehgeschwindigkeiten für Beschichtungen auf Edelstahl 1.4301 (DIN 17440) liegen im Bereich von 1-4 mm/s. Man erhält eine matte, rauhe Beschichtung auf den Edelstahlblechen, die bei Temperaturen von 500-700°C rißfrei ausgeheizt werden können. In Inertgas-Atmosphäre (Argon) wird das Anlaufen des Edelstahls verhindert. Die Schichtdicken liegen bei 3-3,5 µm nach thermischer Verdichtung mit einer Aufheizrate von 1 K/min.

### BEISPIEL 5

### Herstellung eines dunkelbraunen Überzugs auf Glas

160 g GPTS, 40 g TEOS, 43,6 g Mn(NO₃)₂.6H₂O, gelöst in 120 ml Ethanol werden vermischt und auf 60°C erwärmt. Dazu werden 12 g Wasser und 0,5 g HNO₃ konz. zugegeben. Die Lösung wird 15 h bei dieser Temperatur gerührt und das Sol anschließend mit 150 ml Ethanol verdünnt.

Mikroskop-Objektträger werden in die Lösung getaucht und mit Ziehgeschwindigkeiten von 2-4 mm/s herausgezogen. Die erhaltenen Schichten werden bei 500°C getempert und enthalten dann einen Anteil von 20 Gew.-% an MnO₂. Dabei entsteht eine dunkelbraune Farbe.

Für Eisenoxid-haltige Schichten werden 66,7 g Fe(NO₃)₃.9H₂O vorgegeben und nach dem Temperieren auf 60°C noch 1,7 g Wasser zudosiert. Beschichtet und verdichtet wird wie bei den MnO2-haltigen Beschichtungen. Es werden ebenfalls dunkelbraune Schichten mit 20 Gew.-% Fe₂O₃ erhalten.

### BEISPIEL 6

### Herstellung von farbigen hochtemperaturfesten Schichten

5 g Phthalocyanin werden in 10 ml Ethanol aufgelöst. 10 ml Grundsol werden langsam unter Zugabe der ethanolischen Farbstofflösung vermischt. Das entstandene Sol kann nach Filtration über einen 0,2 µm Filter zur Beschichtung verwendet werden. Die Schichten werden bei Temperaturen bis zu 400°C ausgeheizt. Man erhält je nach Komplex unterschiedliche Farben. Beispielsweise liefert Cu-Phthalocyanin eine blaue Beschichtung auf Glas.

### BEISPIEL 7

### Herstellung von photochromen Schichten

Zur Herstellung des Soles werden 10 ml Ethanol und 10 ml Grundsol und/oder GPTS/TEOS-Vorhydrolysat der Verhältnisse 0:1 bis 1:0 bei Raumtemperatur gemischt.

Anschließend werden 0,4-2 g AgNO₃ und 1-20 ml DIAMO zugesetzt und bis zum vollständigen Lösen gerührt. Zu der klaren Lösung gibt man 0,003-0,8 g K₃[Cu(CN)₄]. Zur Ausbildung von AgCl in den Schichten werden 0,48-12 ml 3-Chlorpropyl-trimethoxysilan zum Solansatz gegeben.

Im Falle silberbromidhaltiger Schichten können α-ω-Dibromalkane ab einer Kettenlänge von 8 C-Atomen verwendet werden, z.B. 1,8-Dibromoctan oder 1,10-Dibromdecan. Für die Ausbildung von AgClₓBr₁₋ₓ-Mischkristalliten kommen sowohl 3-Chlorpropyl-trimethoxysilan als auch 1,8-Dibromoctan zum Einsatz (x von 0,25 bis 0,75).

Nach 10-30minütigem Rühren ist das Sol beschichtungsfähig. Die Beschichtung erfolgt durch Tauchen. Dazu werden die Substrate in die Sollösung eingetaucht, 30 s belassen und mit Geschwindigkeiten von 1-7,5 mm/s herausgezogen.

Nach 1-stündigem Trocknen der Schichten bei 65°C werden diese mit 1-3°K/min auf 280-350°C in Normalatmosphäre aufgeheizt und 10 min bis 5 h bei der Endtemperatur getempert. Die Abkühlung der Schichten erfolgte in 10 min bis 10 h auf Raumtemperatur.

Um den photochromen Effekt zu untersuchen, bestrahlt man die 0,2-1,0 µm dicken Schichten mit einer 750 W Hg-Xe-Lampe in einem Abstand von 40 cm zur Lampe. Hierbei erfolgt nach 1-20 min eine Dunkelfärbung. Dabei wird die Transmission um 4-45% verringert.

Die dunkel gefärbten Schichten regenerieren nicht bei Raumtemperatur, eine Aufhellung wird erst bei Temperaturen ab 100°C erreicht. Die vollständige Entfärbung gelingt nach einer Temperaturbehandlung von 15 min bis 1 h bei 200°C. Die Größe der Silberhalogenidkristalle, die aus röntgenographischen Messungen ermittelt wurde, beträgt 5-25 nm im Durchmesser.

### BEISPIEL 8

### Herstellung von gold-, silber-, gold/silber-, kupfer-, platin- und palladiumkolloidhaltigen Beschichtungen

1. Goldkolloidhaltige Beschichtung auf Glassubstrat
   0,31 g H[AuCl₄]-2H₂O werden in 4 ml Ethanol gelöst. Zu dieser Lösung werden 0,18 g DIAMO, in 1 ml Ethanol gelöst, zugetropft. Das auf diese Weise vorkomplexierte Gold wird dann zu 20 ml vorhydrolysiertem GPTS/TEOS-Grundsol, in das zuvor 1,58 ml DIAMO eingerührt wurde, zugetropft. Auf diese Weise kann jedes beliebiges Gold-Stabilisator-Verhältnis (molares Verhältnis von Au zu Stabilisator bis 1:30 erprobt) erreicht werden. Die komplexe Mischung wird 30 Minuten gerührt und anschließend durch 1,2 und 0,8 µm Filter filtriert. Mit dem erhaltenen Sol werden Objektträger durch Tauchen beschichtet. Die Schichten sind zunächst leicht gelb gefärbt. Das Gold wird bei Temperaturen zwischen 80°C und 150°C durch Ethanol zum Kolloid reduziert. Die Schicht wird schließlich unter Luftatmosphäre bei Temperaturen bis zu 500°C verdichtet. Die erhaltenen Schichten sind transparent und rißfrei und je nach Kolloidgröße rot, violett oder blauviolett.
2. Silberkolloidhaltige Beschichtung auf Glassubstrat
   0,51 g AgNO₃ wird in 3,3 ml DIAMO und 3 ml Ethanol gelöst. Die erhaltene Lösung wird in 20 ml vorhydrolysiertes GPTS/TEOS-Grundsol eingerührt, 30 Minuten gerührt und anschließend durch 1,2 und 0,8 µm Filter filtriert. Mit dem erhaltenen leicht gelb gefärbtem Sol werden Objektträger durch Tauchen beschichtet. Die Reduktion der Silberionen zu Kolloiden erfolgt durch Ethanol beim Ausheizen der Schichten bei Temperaturen bis zu 500°C unter Luftatmosphäre. Die rißfreien, transparenten Schichten sind gelb bis gelbbraun.
3. Gold/Silberkolloidhaltige Beschichtung auf Glassubstrat
   0,32 g AgNO₃ wird in 2 ml DIAMO und 2 ml Ethanol gelöst und diese Mischung in 20 ml vorhydrolysiertes GPTS/TEOS-Grundsol eingerührt.
   0,41 g H[AuCl₄]-2H₂O wird in 4 ml Ethanol gelöst und zu dieser Lösung werden 0,23 g DIAMO, in 1 ml Ethanol gelöst, zugetropft. Die erhaltene Lösung wird in 20 ml vorhydrolysiertes GPTS/TEOS-Sol eingerührt.
   Dann wird das silberhaltige Sol zum goldhaltigen Sol zugetropft und 30 Minuten gerührt. Die komplexe Mischung wird 30 Minuten gerührt und anschließend durch 1,2 und 0,8 µm Filter filtriert. Die Schichten sind zunächst leicht gelborange. Die Reduktion der Gold- und Silberionen zum Kolloid erfolgt durch Ethanol bei Temperaturen zwischen 80°C und 140°C unter Luftatmosphäre. Die transparenten Schichten können bis zu 500°C rißfrei ausgeheizt werden und sind aprikosefarben.
4. Kupferkolloidhaltige Beschichtungen
   4.1. CUSO₄ als Precursor
      0,4 g CUSO₄ wird in 4 ml DIAMO und 5 ml Alkoholgemisch gelöst und 5 Stunden gerührt. Die entstandene Lösung wird zu 10 ml vorhydrolysiertem GPTS/TEOS-Grundsol zugegeben und für weitere 30 Minuten gerührt und anschließend durch 1,2 µm Filter filtriert. Mit dem erhaltenen Sol werden Objektträger durch Tauchen beschichtet und bei 80°C vorgetrocknet, wobei die Schichten leicht dunkelblau gefärbt sind. Die Reduktion des Kupfers zum Kolloid erfolgt unter Formiergas (92% Volumenanteil N₂, 8% Volumenanteil H₂) bei Temperaturen zwischen 400°C und 500°C. Die erhaltenen rißfreien, transparenten Schichten sind rot gefärbt.
   4.2. Cu(NO₃)₂ 3H₂O als Precursor
      0,70 g Cu(NO₃)₂ 3H₂O wird in 5 ml Ethanol gelöst und 5 ml einer DIAMO-Ethanol-Mischung (1 ml DIAMO, 4 ml Ethanol) zugegeben. Diese Mischung wird in 10 ml vorhydrolysiertes GPTS/TEOS-Grundsol eingerührt, weitere 30 Minuten gerührt und anschließend durch 1,2 und 0,8 µm Filter filtriert. Mit dem erhaltenen Sol werden Objektträger durch Tauchen beschichtet und bei 80°C vorgetrocknet, wobei die Schichten leicht dunkelblau gefärbt sind. Die Reduktion des Kupfers zum Kolloid erfolgt unter Formiergas (92% Volumenanteil N₂, 8% Volumenanteil H₂) bei Temperaturen zwischen 400°C und 500°C. Die erhaltenen rißfreien, transparenten Schichten sind rot gefärbt.
5. Platinkolloidhaltige Beschichtung
   0,41 g H₂[PtCl₆] 2H₂O wird in 5 ml Ethanol gelöst und 0,67 ml DIAMO zugetropft. Die entstandene Lösung wird in 20 ml vorhydrolysiertes GPTS/TEOS-Grundsol eingerührt, weitere 30 Minuten gerührt und anschließend durch 3,0 und 1,2 µm Filter filtriert. Mit dem erhaltenen Sol werden Objektträger durch Tauchen beschichtet und bei 80°C vorgetrocknet, wobei die Schichten schwach gelb gefärbt sind. Die Reduktion des Platins zum Kolloid und das Aushärten der Schichten erfolgt unter Formiergas (92% Volumenanteil N₂, 8% Volumenanteil H₂) bei Temperaturen zwischen 400°C und 500°C. Die erhaltenen rißfreien und transparenten Schichten sind nach der Temperung graubraun gefärbt.
6. Palladiumkolloidhaltige Beschichtungen auf Glas- und Keramiksubstraten X mg Pd(ac)₂ bzw. Pd(NO₃)₂ (X = 100-400 g) werden in Aceton gelöst. Zu der orangegelben bzw. braun transparenten Lösung gibt man ein Gemisch von DIAMO und 5 ml Ethanol. Das molare Verhältnis zwischen DIAMO und dem Pd-Edukt kann dabei zwischen 3:1 und 12:1 variiert werden. Zu der Reaktionsmischung werden 0-50 ml GPTS/TEOS-Grundsol gegeben (je nach gewünschter Pd-Konzentration). Nachdem das Lösungsmittel bei 30°C (100 mbar) für 5 min im Wasserstrahlvakuum mit der Membranpumpe abdestilliert wurde, kann das Sol sofort zur Beschichtung verwendet werden. Nach Trocknen der Beschichtung (30 min bei 80°C) erfolgt die thermische Verdichtung der Schicht bei Temperaturen bis 600°C in N₂- oder Ar-Atmosphäre. Auf diese Weise erhält man ca. 1 µm dicke, transparente und rißfreie Beschichtungen, deren Farbe je nach Pd-Konzentration zwischen hellbraun bis tief schwarz eingestellt werden kann.

## Patentansprüche

1. Verfahren zur Herstellung von funktionellen glasartigen Schichten auf Substraten, dadurch gekennzeichnet, daß man eine Zusammensetzung, die erhältlich ist durch Hydrolyse und Polykondensation von
(A) mindestens einem hydrolysierbaren Silan der allgemeinen Formel (I)
SiX₄ (I)
in der die Reste X gleich oder verschieden sind und hydrolysierbare Gruppen oder Hydroxylgruppen bedeuten, oder einem davon abgeleiteten Oligomer, und
(B) mindestens einem Organosilan der allgemeinen Formel (II)
R¹ ₐR² _{b}SiX_{(4-a-b)} (II)
in der R¹ eine nicht hydrolysierbare Gruppe ist, R² einen eine funktionelle Gruppe tragenden Rest bedeutet, X die vorstehende Bedeutung hat und a und b den Wert 0, 1, 2 oder 3 haben, wobei die Summe (a+b) den Wert 1, 2 oder 3 hat, oder einem davon abgeleiteten Oligomer in einem Stoffmengenverhältnis (A):(B) von 5-50 : 50-95, sowie
(C) gegebenenfalls einer oder mehreren Verbindungen von glasbildenden Elementen,
mit mindestens einem Funktionsträger aus der Gruppe der temperaturbeständigen Farbstoffe oder Pigmente, Metall- oder Nichtmetalloxide, färbenden Metallionen, Metall- oder Metallverbindungs-Kolloide und Metallionen, die unter Reduktionsbedingungen zu Metall-Kolloiden reagieren, vermischt,
die mit dem Funktionsträger vermischte Zusammensetzung auf ein Substrat aufbringt und
den Überzug thermisch zu einer glasartigen Schicht verdichtet.

2. Verfahren nach Anspruch 1, dadurch gekennzeichnet, daß man als hydrolysierbare Silane (A) Tetraalkoxysilane verwendet.

3. Verfahren nach Anspruch 1 oder 2, dadurch gekennzeichnet, daß man als Organosilane (B) Epoxysilane oder Aminosilane verwendet.

4. Verfahren nach einem der Ansprüche 1 bis 3, dadurch gekennzeichnet, daß man die Hydrolyse und Polykondensation unter den Bedingungen des Sol-Gel-Prozesses durchführt.

5. Verfahren nach einem der Ansprüche 1 bis 4, dadurch gekennzeichnet, daß man die Hydrolyse und Polykondensation in Gegenwart eines Komplexbildners durchführt.

6. Verfahren nach einem der Ansprüche 1 bis 5, dadurch gekennzeichnet, daß man als Funktionsträger einen temperaturbeständigen Farbstoff aus der Gruppe der Azofarbstoffe, Dispersionsfarbstoffe, Perylenfarbstoffe, Triphenylmethanfarbstoffe, Küpenfarbstoffe und Fluoreszenzfarbstoffe; oder ein Pigment aus der Gruppe der Phthalocyanin- oder Rußpigmente verwendet.

7. Verfahren nach einem der Ansprüche 1 bis 5, dadurch gekennzeichnet, daß man als Funktionsträger färbende Metallionen in der Form von wasserlöslichen Metallsalzen verwendet.

8. Verfahren nach einem der Ansprüche 1 bis 5, dadurch gekennzeichnet, daß man als Funktionsträger Nanopartikel mit einem Teilchendurchmesser von 1 bis 100 nm verwendet.

9. Verfahren nach Anspruch 8, dadurch gekennzeichnet, daß man als Funktionsträger Metall- oder Nichtmetalloxide, Metall- oder Metallverbindungskolloide von Metallen, Metallhalogeniden, Metallcarbiden, Metallnitriden, Metallarseniden, Metallphosphiden oder Metallchalkogeniden verwendet.

10. Verfahren nach einem der Ansprüche 1 bis 9, dadurch gekennzeichnet, daß das Substrat aus Metall, Glas oder Keramik besteht.

11. Verfahren nach einem der Ansprüche 1 bis 10, dadurch gekennzeichnet, daß den Überzug, gegebenenfalls nach vorherigem Trocknen, bei Temperaturen über 250°C, vorzugsweise über 400°C thermisch verdichtet.

## Claims

1. A process for producing functional vitreous layers on substrates, characterized in that a composition obtainable by hydrolysis and polycondensation of
(A) at least one hydrolyzable silane of general formula (I)
SiX₄ (I)
wherein the radicals X are the same or different and represent hydrolyzable groups or hydroxy groups, or an oligomer derived therefrom, an
(B) at least one organosilane of general formula (II)
R¹ ₐR² _{b}SiX_{(4-a-b)} (II)
wherein R¹ is a non-hydrolyzable group, R² represents a radical carrying a functional group, X has the meaning given above, and a and b have the values 0, 1, 2 or 3, the sum of (a+b) having the values 1, 2 or 3, or an oligomer derived therefrom
in a molar ratio (A):(B) of 5-50:50-95, as well as
(C) optionally, one or more compounds of glass-forming elements,
is mixed with at least one function carrier selected from the group of temperature-stable dyes or pigments, oxides of metals or non-metals, coloring metal ions, colloids of metals or metal compounds, and metal ions capable of reacting to form metal colloids under reducing conditions,
the composition admixed with said function carrier is applied onto a substrate and
the coating is densified thermally to form a vitreous layer.

2. Process according to Claim 1, characterized in that tetraalkoxysilanes are used as hydrolyzable silanes (A).

3. Process according to Claim 1 or 2, characterized in that epoxysilanes or aminosilanes are used as organosilanes (B).

4. Process according to any one of Claims 1 to 3, characterized in that said hydrolysis and polycondensation are carried out under the conditions of the sol-gel process.

5. Process according to any one of Claims 1 to 4, characterized in that said hydrolysis and polycondensation are carried out in the presence of a complexing agent.

6. Process according to any one of Claims 1 to 5, characterized in that as said function carrier a temperature-stable dye selected from the group of azo dyes, dispersed dyes, perylene dyes, triphenylmethane dyes, vat dyes, and fluorescent dyes; or a pigment selected from the group of phthalocyanine and carbon black pigments is used.

7. Process according to any one of Claims 1 to 5, characterized in that as function carrier coloring metal ions in the form of water-soluble metal salts are used.

8. Process according to any one of Claims 1 to 5, characterized in that as function carrier nanoparticles having a particle diameter of from 1 to 100 nm are used.

9. Process according to Claim 8, characterized in that as function carrier oxides of metals or non-metals, metal or metal compound colloids of metals, metal halides, metal carbides, metal nitrides, metal arsenides, metal phosphides, or metal chalcogenides are used.

10. Process according to any one of Claims 1 to 9, characterized in that the substrate consists of metal, glass, or ceramics.

11. Process according to any one of Claims 1 to 10, characterized in that the coating, optionally after drying thereof, is densified thermally at temperatures above 250°C, preferably above 400°C.

## Revendications

1. Procédé de fabrication de couches vitreuses fonctionnelles sur des substrats, caractérisé en ce qu'on mélange une composition qu'on obtient par hydrolyse et polycondensation de
(A) au moins un silane hydrolysable répondant à la formule générale (I)
SiX₄ (I)
où les restes X sont identiques ou différents et signifient des groupes hydrolysables ou des groupes hydroxyles, ou un oligomère obtenu à partir de celui-ci, et
(B) au moins un organosilane répondant à la formule générale (II)
R¹ ₐR² _{b}SiX_{(4-a-b)} (II)
où R¹ est un groupe non hydrolysable, R² signifie un reste portant un groupe fonctionnel, X a la signification indiquée ci-dessus, et a et b valent 0, 1, 2 ou 3, la somme de (a+b) valant 1, 2 ou 3, ou un oligomère obtenu à partir de celui-ci,
selon un rapport quantitatif des substances (A):(B) de 5 - 50 : 50 - 95, ainsi que
(C) éventuellement un ou plusieurs composés d'éléments formant un verre,
avec au moins un support fonctionnel choisi dans l'ensemble des colorants ou des pigments résistant aux températures, des oxydes métalliques ou non métalliques, des ions métalliques colorants, des colloïdes de métaux ou de composés métalliques et des ions métalliques qui réagissent en donnant des colloïdes de métaux dans des conditions de réduction,
on applique la composition mélangée avec le support fonctionnel sur un substrat, et
on comprime le revêtement par voie thermique de façon à obtenir une couche vitreuse.

2. Procédé selon la revendication 1, caractérisé en ce qu'on utilise des tétraalcoxysilanes comme silanes hydrolysables (A).

3. Procédé selon la revendication 1 ou 2, caractérisé en ce qu'on utilise des époxysilanes ou des aminosilanes comme organosilanes (B).

4. Procédé selon l'une des revendications 1 à 3, caractérisé en ce qu'on effectue l'hydrolyse et la polycondensation dans les conditions du procédé sol-gel.

5. Procédé selon l'une des revendications 1 à 4, caractérisé en ce qu'on effectue l'hydrolyse et la polycondensation en présence d'un agent complexant.

6. Procédé selon l'une des revendications 1 à 5, caractérisé en ce qu'on utilise, comme support fonctionnel, un colorant résistant aux températures, choisi dans l'ensemble constitué par les colorants azoïques, les colorants de dispersion, les colorants du type pérylène, les colorants du type triphénylméthane, les colorants de cuve et les colorants fluorescents, ou un pigment choisi dans l'ensemble constitué par les pigments phtalocyanines ou les pigments de noir de fumée.

7. Procédé selon l'une des revendications 1 à 5, caractérisé en ce qu'on utilise, comme support fonctionnel, des ions métalliques colorants sous la forme de sels métalliques solubles dans l'eau.

8. Procédé selon l'une des revendications 1 à 5, caractérisé en ce qu'on utilise, comme support fonctionnel, des particules nanométriques ayant un diamètre moyen de 1 à 100 nm.

9. Procédé selon la revendication 8, caractérisé en ce qu'on utilise, comme support fonctionnel, des oxydes métalliques ou non métalliques, des colloïdes de métaux ou de composés métalliques, formés de métaux, d'halogénures de métaux, de carbures de métaux, de nitrures de métaux, d'arséniures de métaux, de phosphures de métaux ou de chalcogénures de métaux.

10. Procédé selon l'une des revendications 1 à 9, caractérisé en ce que le substrat est formé de métal, de verre ou de céramique.

11. Procédé selon l'une des revendications 1 à 10, caractérisé en ce qu'on comprime le revêtement par voie thermique, éventuellement après un séchage préalable, à des températures supérieures à 250°C, de préférence supérieures à 400°C.
